# EUROPÄISCHE PATENTSCHRIFT

(11) **EP 2 758 267 B1**
(45) Veröffentlichungstag und Bekanntmachung des Hinweises auf die Patenterteilung: **06.11.2019**
(21) Anmeldenummer: 12762220.7
(22) Anmeldetag: 18.09.2012
(51) Int. Cl.: B60K 37/00

(54) **VORRICHTUNG UND VERFAHREN ZUR ANZEIGE VON BEWEGTBILDERN IN EINEM KRAFTFAHRZEUG SOWIE KRAFTFAHRZEUG**
APPARATUS AND METHOD FOR DISPLAYING MOVING IMAGES IN A MOTOR VEHICLE, AND MOTOR VEHICLE
DISPOSITIF ET PROCÉDÉ D'AFFICHAGE D'IMAGES ANIMÉES DANS UN VÉHICULE À MOTEUR ET VÉHICULE À MOTEUR

(30) Priorität: 22.09.2011 DE 102011114059
(43) Veröffentlichungstag der Anmeldung: 30.07.2014
(73) Patentinhaber: Daimler AG, 70327 Stuttgart (DE)
(72) Erfinder: EIREINER, Thomas, 89278 Nersingen (DE); HINZ, Ralf, 89075 Ulm (DE)
(74) Vertreter: JENSEN & SON
(86) Internationale Anmeldenummer: PCT/EP2012/003892
(87) Internationale Veröffentlichungsnummer: WO 2013/041209

(56) Entgegenhaltungen:
- US-A1- 2005 116 879

## Beschreibung

Die Erfindung betrifft eine Vorrichtung zur Anzeige von Bewegtbildern in einem Kraftfahrzeug gemäß dem Oberbegriff des Anspruchs 1 und ein entsprechendes Kraftfahrzeug.

Das bekannte Infotainmentsystem "COMAND" für die Personenwagen von Mercedes-Benz umfasst ein Farbdisplay, das in der Mittelkonsole oder neben dem Kombiinstrument über der Mittelkonsole angeordnet ist, einen marktspezifischen TV-Tuner (heute z. B. DVB-T, DTMB, ISDB-T) und ein DVD-Abspielgerät. Auf dem Farbdisplay können im sogenannten "TV-Betrieb" TV-Sendungen von dem TV-Tuner und im sogenannten "DVD-Video-Betrieb" Filme von dem DVD-Abspielgerät angezeigt werden. Dieses bekannte Infotainmentsystem weist eine sogenannte "automatische Bildabschaltung" auf, die bewirkt, dass bei Überschreiten einer Fahrgeschwindigkeit von 5 km/h die Anzeige der Bewegtbilder auf dem Farbdisplay abgeschaltet und stattdessen im Farbdisplay ein erklärender Hinweis auf schwarzem Hintergrund angezeigt wird und bei Unterschreiten einer Fahrgeschwindigkeit von 3 km/h die Anzeige der Bewegtbilder auf dem Farbdisplay wieder eingeschaltet wird. Hierdurch sollen die Risiken durch Fahrerablenkung verringert werden.

Ein Nachteil dieses bekannten Infotainmentsystems besteht darin, dass die Anzeige des Hinweises auf schwarzem Hintergrund sehr dunkel ist und die abrupten Wechsel von der normalen Anzeige oder Wiedergabe der Bewegtbilder zu dieser dunklen Anzeige und umgekehrt den Fahrer ablenken oder für ihn lästig sein können, sodass er gerade bei Verkehrsstau oder stockendem Verkehr oft versucht, sein Fahrprofil dem Algorithmus der automatischen Bildabschaltung anzupassen. Dies stellt eine Fahrerablenkung dar, wodurch das Unfallrisiko steigt.

Aus der US 2005/0116879 A1 ist ein Verfahren gemäß dem Oberbegriff des Anspruchs 1 bekannt.

Die Aufgabe der Erfindung besteht darin, bei einer Vorrichtung gemäß dem Oberbegriff des Anspruchs 1 und einem entsprechenden Kraftfahrzeug die Risiken durch Fahrerablenkung weiter zu verringern.

Diese Aufgabe wird durch eine Vorrichtung gemäß Anspruch 1 und ein Kraftfahrzeug gemäß Anspruch 8 gelöst. Weitere Ausführungsformen sind in den Unteransprüchen beschrieben.

Die Erfindung schlägt gemäß einem ersten Aspekt eine Vorrichtung zur Anzeige von Bewegtbildern in einem Kraftfahrzeug vor, umfassend
- wenigstens einen Bildschirm zur Anzeige der Bewegtbilder, an den wenigstens eine Bewegtbildquelle für die Bewegtbilder angeschlossen werden kann oder ist;
- eine Steuerungseinheit für den Bildschirm, die den Bildschirm in wenigstens einem ersten Modus, in dem die Bewegtbilder mit normalen Wiedergabeparametern angezeigt werden, und einem zweiten Modus ansteuert oder ansteuern kann;
   wobei
- wenigstens ein Geschwindigkeitssensor an die Steuerungseinheit angeschlossen werden kann oder ist, der die Geschwindigkeit des Kraftfahrzeugs erfasst oder erfassen kann und an die Steuerungseinheit sendet oder senden kann;
- die Steuerungseinheit den ersten Modus wählt, wenn die Geschwindigkeit kleiner als ein erster Schwellenwert ist;
- die Steuerungseinheit den zweiten Modus wählt, wenn die Geschwindigkeit größer gleich einem zweiten Schwellenwert ist, der größer gleich dem ersten Schwellenwert ist;
- in dem zweiten Modus die Bildwiederholfrequenz kleiner als in dem ersten Modus ist.

Die kleinere Bildwiederholfrequenz führt zu einer geringeren Fahrerablenkung als der abrupte Wechsel zu dem dunklen Bild bei dem bekannten Infotainmentsystem "COMAND" und zu einer attraktiveren Darstellung oder Anzeige auf dem Bildschirm.

Die Bewegtbildquelle kann nach Bedarf auf beliebige Art und Weise an den Bildschirm angeschlossen werden, beispielsweise direkt oder indirekt, insbesondere über die Steuerungseinheit.

Die Wiedergabeparameter, die für die Anzeige und Wiedergabe der Bewegtbilder verwendet werden, umfassen beispielsweise die Bildwiederholfrequenz, die Bildauflösung, die Farbtiefe und die Helligkeit.

Die Steuerungseinheit kann nach Bedarf auf beliebige Art und Weise ausgebildet sein, beispielsweise derart, dass sie den Bildschirm in wenigstens einem weiteren Modus ansteuert oder ansteuern kann und jeden dieser weiteren Modi in Abhängigkeit von wenigstens einer weiteren Bedingung wählt, die insbesondere wenigstens einen weiteren Schwellenwert für die Geschwindigkeit und das Überschreiten dieses weiteren Schwellenwerts umfasst. So kann beispielsweise vorgesehen sein, dass die Steuerungseinheit den Bildschirm in einem dritten Modus ansteuert oder ansteuern kann, in dem ein Hinweis auf dunklem, insbesondere schwarzem Hintergrund angezeigt wird, und den dritten Modus wählt, wenn die Geschwindigkeit größer gleich einem dritten Schwellenwert ist, der größer gleich dem zweiten Schwellenwert ist.

Es ist vorgesehen sein, dass
- wenigstens ein Abstandssensor an die Steuerungseinheit angeschlossen werden kann oder ist, der den Abstand des Kraftfahrzeugs zu einem in Fahrtrichtung vor dem Kraftfahrzeug befindlichen Gegenstand und/oder zu einem vorausfahrenden Fahrzeug erfasst oder erfassen kann und an die Steuerungseinheit sendet oder senden kann;
- die Steuerungseinheit den ersten und/oder den zweiten Schwellenwert gemäß einer isotonen Funktion von dem Abstand ändert oder ändern kann.

Eine "isotone" Funktion heißt auch "monoton steigende" Funktion. Da die Steuerungseinheit den ersten und/oder den zweiten Schwellenwert gemäß einer isotonen Funktion von dem Abstand ändert oder ändern kann, vergrößert sie den jeweiligen Schwellenwert oder lässt ihn unverändert, wenn der von dem Abstandssensor erfasste und an sie gesendete Abstand steigt, und verkleinert sie den jeweiligen Schwellenwert oder lässt ihn unverändert, wenn der von dem Abstandssensor erfasste und an sie gesendete Abstand sinkt. Dieses isotone Ändern kann nach Bedarf auf beliebige Art und Weise erfolgen, beispielsweise stufenweise mit wenigstens einer Stufe oder kontinuierlich, insbesondere proportional oder unterproportional oder überproportional zu dem Abstand.

Es kann vorgesehen sein, dass
- wenigstens ein Relativgeschwindigkeitssensor an die Steuerungseinheit angeschlossen werden kann oder ist, der die Relativgeschwindigkeit des Kraftfahrzeugs zu einem vorausfahrenden Fahrzeug erfasst oder erfassen kann und an die Steuerungseinheit sendet oder senden kann;
- die Steuerungseinheit den ersten und/oder den zweiten Schwellenwert gemäß einer antitonen Funktion von der Relativgeschwindigkeit ändert oder ändern kann.

Eine "antitone" Funktion heißt auch "monoton fallende" Funktion. Da die Steuerungseinheit den ersten und/oder den zweiten Schwellenwert gemäß einer antitonen Funktion von der Relativgeschwindigkeit ändert oder ändern kann, verkleinert sie den jeweiligen Schwellenwert oder lässt ihn unverändert, wenn die von dem Relativgeschwindigkeitssensor erfasste und an sie gesendete Relativgeschwindigkeit steigt, und vergrößert sie den jeweiligen Schwellenwert oder lässt ihn unverändert, wenn die von dem Relativgeschwindigkeitssensor erfasste und an sie gesendete Relativgeschwindigkeit sinkt. Dieses antitone Ändern kann nach Bedarf auf beliebige Art und Weise erfolgen, beispielsweise stufenweise mit wenigstens einer Stufe oder kontinuierlich, insbesondere proportional oder unterproportional oder überproportional zu der Relativgeschwindigkeit.

Die Erfindung schlägt gemäß einem zweiten Aspekt ein Kraftfahrzeug vor, umfassend wenigstens eine der vorgeschlagenen Vorrichtungen.

Bevorzugt umfasst jedes vorgeschlagene Kraftfahrzeug weiter wenigstens einen Geschwindigkeitssensor, der an die Steuerungseinheit angeschlossen ist und die Geschwindigkeit des Kraftfahrzeugs erfasst oder erfassen kann und an die Steuerungseinheit sendet oder senden kann.

Jedes vorgeschlagene Kraftfahrzeug umfasst weiter
- wenigstens einen Abstandssensor, der an die Steuerungseinheit angeschlossen ist und den Abstand des Kraftfahrzeugs zu einem in Fahrtrichtung vor dem Kraftfahrzeug befindlichen Gegenstand und/oder zu einem vorausfahrenden Fahrzeug erfasst oder erfassen kann und an die Steuerungseinheit sendet oder senden kann;
   wobei
- die Steuerungseinheit den ersten und/oder den zweiten Schwellenwert gemäß einer isotonen Funktion von dem Abstand ändert oder ändern kann.

Der Abstandssensor kann nach Bedarf auf beliebige Art und Weise ausgebildet sein und beispielsweise mit Laserlicht und/oder LIDAR und/oder RADAR und/oder Ultraschall arbeiten.

Bevorzugt umfasst jedes vorgeschlagene Kraftfahrzeug weiter
- wenigstens einen Relativgeschwindigkeitssensor, der an die Steuerungseinheit angeschlossen ist und die Relativgeschwindigkeit des Kraftfahrzeugs zu einem vorausfahrenden Fahrzeug erfasst oder erfassen kann und an die Steuerungseinheit sendet oder senden kann;
   wobei
- die Steuerungseinheit den ersten und/oder den zweiten Schwellenwert gemäß einer antitonen Funktion von der Relativgeschwindigkeit ändert oder ändern kann.

Der Relativgeschwindigkeitssensor kann nach Bedarf auf beliebige Art und Weise ausgebildet sein und beispielsweise mit Laserlicht und/oder LIDAR und/oder RADAR und/oder Ultraschall arbeiten.

Bevorzugt umfasst jede vorgeschlagene Vorrichtung und jedes vorgeschlagene Kraftfahrzeug weiter wenigstens eine Bewegtbildquelle für die Bewegtbilder, die an den Bildschirm, beispielsweise direkt oder indirekt, insbesondere über die Steuerungseinheit, angeschlossen ist, und/oder wenigstens einen Steckplatz für den Anschluss einer Bewegtbildquelle, der an den Bildschirm, beispielsweise direkt oder indirekt, insbesondere über die Steuerungseinheit, angeschlossen ist.

Die Bewegtbildquelle kann nach Bedarf auf beliebige Art und Weise ausgebildet sein, beispielsweise als analoger und/oder digitaler TV-Tuner, DVD-Abspielgerät, BD-Abspielgerät, externe Festplatte, Flash-Speicherkarte oder USB-Speicherstick.

Bei den vorgeschlagenen Vorrichtungen und den vorgeschlagenen Kraftfahrzeugen kann vorgesehen sein, dass
- der zweite Schwellenwert größer als der erste Schwellenwert ist;
- die Steuerungseinheit in dem ersten Modus bleibt, wenn der erste Schwellenwert erreicht oder überschritten wird, und aus dem ersten Modus in den zweiten Modus wechselt, wenn der zweite Schwellenwert erreicht oder überschritten wird;
- die Steuerungseinheit in dem zweiten Modus bleibt, wenn der zweite Schwellenwert unterschritten wird, und aus dem zweiten Modus in den ersten Modus wechselt, wenn der erste Schwellenwert unterschritten wird.

Die Schwellenwerte können nach Bedarf beliebig gewählt werden. So kann beispielsweise der erste Schwellenwert 3 km/h und der zweite Schwellenwert 5 km/h betragen.

Da die Steuerungseinheit erst bei Erreichen oder Überschreiten des zweiten Schwellenwerts in den zweiten Modus wechselt und erst bei Unterschreiten des ersten Schwellenwerts in den ersten Modus wechselt, wählt sie die Modi nach Art einer Hysterese aus.

Bei den vorgeschlagenen Vorrichtungen und den vorgeschlagenen Kraftfahrzeugen kann vorgesehen sein, dass die Steuerungseinheit erst dann in dem zweiten Modus arbeitet, wenn die Zeitspanne, während der die Geschwindigkeit größer gleich dem zweiten Schwellenwert ist, größer als ein vorgegebener Mindestwert ist.

Da die Steuerungseinheit erst nach Ablauf dieser Zeitspanne in dem zweiten Modus arbeitet oder aus dem ersten Modus in den zweiten Modus wechselt, wird der zweite Modus mit einer dem Mindestwert entsprechenden Verzögerung aktiviert. Dies erlaubt ein flüssigeres Mitfahren bei Verkehrsstau und stockendem Verkehr.

Der Mindestwert kann nach Bedarf beliebig gewählt werden und beträgt beispielsweise 10 s.

Bei den vorgeschlagenen Vorrichtungen und den vorgeschlagenen Kraftfahrzeugen kann vorgesehen sein, dass in dem zweiten Modus die Steuerungseinheit die Bildwiederholfrequenz gemäß einer antitonen Funktion von der Geschwindigkeit und/oder von der Zeit ändert oder ändern kann.

Da die Steuerungseinheit die Bildwiederholfrequenz gemäß einer antitonen Funktion von der Geschwindigkeit und/oder von der Zeit ändert oder ändern kann, verkleinert sie den jeweiligen Schwellenwert oder lässt sie unverändert, wenn die von dem Geschwindigkeitssensor erfasste und an sie gesendete Geschwindigkeit und/oder die Zeit steigt, und vergrößert sie die die Bildwiederholfrequenz oder lässt sie unverändert, wenn die von dem Geschwindigkeitssensor erfasste und an sie gesendete Geschwindigkeit sinkt. Dieses antitone Ändern kann nach Bedarf auf beliebige Art und Weise erfolgen, beispielsweise stufenweise mit wenigstens einer Stufe oder kontinuierlich, insbesondere proportional oder unterproportional oder überproportional zu der Geschwindigkeit und/oder der Zeit.

Bei den vorgeschlagenen Vorrichtungen und den vorgeschlagenen Kraftfahrzeugen kann vorgesehen sein, dass in dem zweiten Modus die Bildwiederholfrequenz 0 Hz beträgt.

Dann kann beispielsweise dasjenige Einzelbild der Bewegtbilder als Standbild oder eingefroren angezeigt werden, das aktuell oder zuletzt angezeigt wurde.

Bei den vorgeschlagenen Vorrichtungen und den vorgeschlagenen Kraftfahrzeugen kann vorgesehen sein, dass in dem zweiten Modus die Bildauflösung und/oder die Farbtiefe und/oder die Helligkeit kleiner als in dem ersten Modus ist.

Das Verkleinern der Bildauflösung kann beispielsweise durch Reduktion der Pixeldichte nach Art einer Verpixelung erfolgen. Das Verkleinern der Farbtiefe kann beispielsweise zu einer Darstellung der Bewegtbilder in Graustufen oder in Schwarz-Weiß führen. Das Verkleinern der Helligkeit kann beispielsweise zu einer dunkleren Darstellung der Bewegtbilder führen.

Die Ausführungen zu den vorgeschlagenen Vorrichtungen, insbesondere zu einzelnen Merkmalen der vorgeschlagenen Vorrichtungen, gelten entsprechend auch analog für die vorgeschlagenen Kraftfahrzeuge. Die Ausführungen zu den vorgeschlagenen Kraftfahrzeugen, insbesondere zu einzelnen Merkmalen der vorgeschlagenen Kraftfahrzeuge, gelten entsprechend auch analog für die vorgeschlagenen Vorrichtungen.
Im Folgenden wird eine Ausführungsform der Erfindung beispielhaft anhand der beigefügten Zeichnungen näher erläutert werden. Die daraus hervorgehenden einzelnen Merkmale sind jedoch nicht auf die einzelne Ausführungsform beschränkt, sondern können mit weiter oben beschriebenen einzelnen Merkmalen und/oder mit einzelnen Merkmalen verbunden werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigte Ausführungsform. Dabei zeigen:
- Fig. 1: eine Vorrichtung zur Anzeige von Bewegtbildern; und
- Fig. 2: einen Ausschnitt eines Kraftfahrzeugs mit einer Vorrichtung zur Anzeige von Bewegtbildern in einer Ausführungsform.

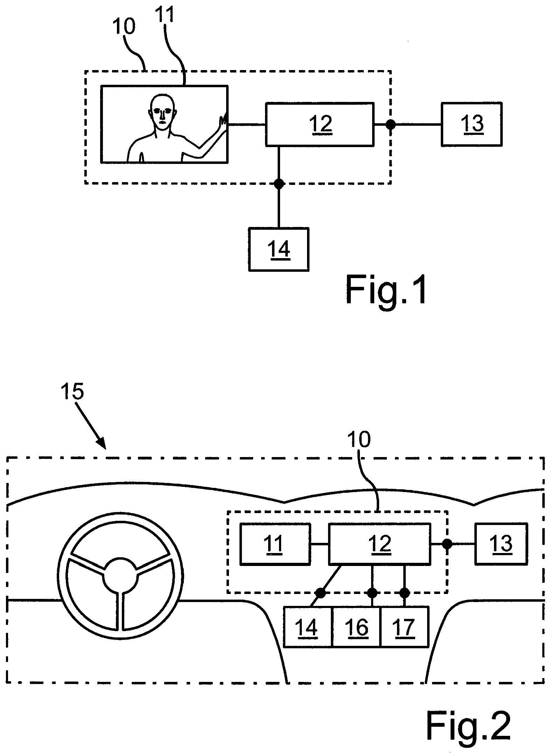

In der Fig. 1 ist eine erfindungsgemäße Vorrichtung 10 zur Anzeige von Bewegtbildern in einem Kraftfahrzeug schematisch dargestellt. Diese Vorrichtung 10 umfasst einen Bildschirm 11 zur Anzeige der Bewegtbilder und eine Steuerungseinheit 12 für den Bildschirm 11. An den Bildschirm 11 kann eine Bewegtbildquelle 13 für die Bewegtbilder angeschlossen werden, und an die Steuerungseinheit 12 kann ein Geschwindigkeitssensor 14 angeschlossen werden, der die Geschwindigkeit des Fahrzeugs, in dem die Vorrichtung 10 eingebaut ist, erfasst und an die Steuerungseinheit 12 sendet.

In der Fig. 1 ist gezeigt, dass eine derartige Bewegtbildquelle 13 an die Steuerungseinheit 12 und somit indirekt über die Steuerungseinheit 12 an den Bildschirm 11 angeschlossen ist. Die Bewegtbildquelle 13 ist hier als DVB-T-Tuner ausgebildet. In der Fig. 1 ist weiter gezeigt, dass ein derartiger Geschwindigkeitssensor 14 an die Steuerungseinheit 12 angeschlossen ist.

Die Steuerungseinheit 12 ist derart ausgebildet, dass sie den Bildschirm 11 in einem ersten Modus, in dem die Bewegtbilder mit normalen Wiedergabeparametern angezeigt werden, und in einem zweiten Modus ansteuern kann, dass sie den ersten Modus wählt, wenn die von dem Geschwindigkeitssensor 14 gesendete Geschwindigkeit kleiner als ein erster Schwellenwert ist, und dass sie den zweiten Modus wählt, wenn diese Geschwindigkeit größer gleich einem zweiten Schwellenwert ist. Bei dieser ersten Ausführungsform ist der zweite Schwellenwert gleich dem ersten Schwellenwert, der 3 km/h beträgt, und beträgt in dem zweiten Modus die Bildwiederholfrequenz, mit der die Bewegtbilder auf dem Bildschirm 11 wiedergegeben werden, 0 Hz und ist somit kleiner als in dem ersten Modus, in dem die Bewegtbilder mit einer normalen Bildwiederholfrequenz von 60 Hz wiedergegeben werden. In dem zweiten Modus wird dasjenige Einzelbild aus den Bewegtbildern als Standbild, d.h. mit der Bildwiederholfrequenz von 0 Hz, auf dem Bildschirm angezeigt, das zu dem Zeitpunkt, zu dem die Steuerungseinheit 12 in den zweiten Modus gewechselt ist, gerade aktuell auf dem Bildschirm 11 angezeigt wurde.

In der Fig. 2 ist ein erfindungsgemäßes Kraftfahrzeug 15 schematisch dargestellt, das eine erfindungsgemäße Vorrichtung 10 in einer Ausführungsform umfasst. Diese Ausführungsform ähnelt der Vorrichtung in Fig. 1, sodass im Folgenden lediglich die Unterschiede näher erläutert werden.

Bei dieser Ausführungsform kann an die Steuerungseinheit 12 ein Abstandssensor 16 und ein Relativgeschwindigkeitssensor 17 angeschlossen werden. Das Kraftfahrzeug 15 umfasst weiter eine Bewegtbildquelle 13, die hier einen DVB-T-Tuner und ein DVD-Abspielgerät aufweist, einen Geschwindigkeitssensor 14, einen Abstandssensor 16 und einen Relativgeschwindigkeitssensor 17.

In der Fig. 2 ist gezeigt, dass diese Geräte 13, 14, 16, 17 an die Steuerungseinheit 12 angeschlossen sind.

Bei dieser Ausführungsform ist der zweite Schwellenwert gleich 5 km/h und somit größer als der erste Schwellenwert. Weiter ist die Steuerungseinheit 12 derart ausgebildet, dass sie in dem ersten Modus bleibt, wenn der erste Schwellenwert erreicht oder überschritten wird, dass sie aus dem ersten Modus in den zweiten Modus wechselt, wenn der zweite Schwellenwert erreicht oder überschritten wird, dass sie in dem zweiten Modus bleibt, wenn der zweite Schwellenwert unterschritten wird, und dass sie aus dem zweiten Modus in den ersten Modus wechselt, wenn der erste Schwellenwert unterschritten wird.

Bei dieser Ausführungsform ist die Steuerungseinheit 12 weiter derart ausgebildet, dass sie in dem zweiten Modus die Bildwiederholfrequenz auf 75% der normalen Bildwiederholfrequenz verringert, wenn die Geschwindigkeit um höchstens 10 km/h größer als der zweite Schwellenwert ist, auf 50% der normalen Bildwiederholfrequenz verringert, wenn die Geschwindigkeit um mehr als 10 km/h, aber um höchstens 20 km/h größer als der zweite Schwellenwert ist, auf 25% der normalen Bildwiederholfrequenz verringert, wenn die Geschwindigkeit um mehr als 20 km/h, aber um höchstens 30 km/h größer als der zweite Schwellenwert ist, und auf 5% der normalen Bildwiederholfrequenz verringert, wenn die Geschwindigkeit um mehr als 30 km/h größer als der zweite Schwellenwert ist. Somit ändert die Steuerungseinheit die Bildwiederholfrequenz stufenweise gemäß einer antitonen Funktion von der Geschwindigkeit.

Bei dieser Ausführungsform ist die Steuerungseinheit 12 außerdem derart ausgebildet, dass sie den ersten Schwellenwert um 1 km/h und den zweiten Schwellenwert um 2 km/h erhöht, wenn der Abstand mehr als 5 m und höchstens 7 m beträgt, den ersten Schwellenwert um 2 km/h und den zweiten Schwellenwert um 4 km/h erhöht, wenn der Abstand mehr als 7 m und höchstens 10 m beträgt, und den ersten Schwellenwert um 3 km/h und den zweiten Schwellenwert um 6 km/h erhöht, wenn der Abstand mehr als 10 m beträgt. Somit ändert die Steuerungseinheit 12 den ersten und den zweiten Schwellenwert stufenweise gemäß einer isotonen Funktion von dem Abstand.

Bei dieser Ausführungsform ist die Steuerungseinheit 12 zudem derart ausgebildet, dass sie den ersten und den zweiten Schwellenwert um 5 km/h erhöht, wenn die Relativgeschwindigkeit negativ ist, also das Kraftfahrzeug 15 langsamer als das vorausfahrende Fahrzeug ist, den ersten und den zweiten Schwellenwert nicht ändert, wenn die Relativgeschwindigkeit mindestens 0 km/h, aber höchstens 2 km/h beträgt, den ersten und den zweiten Schwellenwert um 1 km/h verringert, wenn die Relativgeschwindigkeit mehr als 2 km/h und höchstens 4 km/h beträgt, und den ersten und den zweiten Schwellenwert um 2 km/h verringert, wenn die Relativgeschwindigkeit mehr als 4 km/h beträgt. Somit ändert die Steuerungseinheit 12 den ersten und den zweiten Schwellenwert stufenweise gemäß einer antitonen Funktion von der Relativgeschwindigkeit.

## Patentansprüche

1. Vorrichtung (10) zur Anzeige von Bewegtbildern in einem Kraftfahrzeug (15), umfassend:
wenigstens einen Bildschirm (11) zur Anzeige der Bewegtbilder, an den wenigstens eine Bewegtbildquelle (13) für die Bewegtbilder anschließbar ist; und
eine Steuerungseinheit (12) für den Bildschirm (11), die den Bildschirm (11) in wenigstens einem ersten Modus, in dem die Bewegtbilder mit normalen Wiedergabeparametern angezeigt werden, und einem zweiten Modus ansteuert, wobei
wenigstens ein Geschwindigkeitssensor (14) an die Steuerungseinheit (12) anschließbar ist, der die Geschwindigkeit des Kraftfahrzeugs (15) erfasst und an die Steuerungseinheit (12) sendet;
die Steuerungseinheit (12) den ersten Modus wählt, wenn die Geschwindigkeit kleiner als ein erster Schwellenwert ist;
die Steuerungseinheit (12) den zweiten Modus wählt, wenn die Geschwindigkeit größer gleich einem zweiten Schwellenwert ist, der größer gleich dem ersten Schwellenwert ist; und
in dem zweiten Modus die Bildwiederholfrequenz kleiner als in dem ersten Modus ist,
**dadurch gekennzeichnet, dass**
wenigstens ein Abstandssensor (16) an die Steuerungseinheit (12) anschließbar ist, der den Abstand des Kraftfahrzeugs (15) zu einem in Fahrtrichtung vor dem Kraftfahrzeug (15) befindlichen Gegenstand und/oder zu einem vorausfahrenden Fahrzeug erfasst und an die Steuerungseinheit (12) sendet; und
die Steuerungseinheit (12) den ersten und/oder den zweiten Schwellenwert gemäß einer isotonen Funktion von dem Abstand ändert.

2. Vorrichtung (10) nach Anspruch 1, wobei
der zweite Schwellenwert größer als der erste Schwellenwert ist;
die Steuerungseinheit (12) in dem ersten Modus bleibt, wenn der erste Schwellenwert erreicht oder überschritten wird, und aus dem ersten Modus in den zweiten Modus wechselt, wenn der zweite Schwellenwert erreicht oder überschritten wird; und
die Steuerungseinheit (12) in dem zweiten Modus bleibt, wenn der zweite Schwellenwert unterschritten wird, und aus dem zweiten Modus in den ersten Modus wechselt, wenn der erste Schwellenwert unterschritten wird.

3. Vorrichtung (10) nach einem der vorherigen Ansprüche, wobei die Steuerungseinheit (12) erst dann in dem zweiten Modus arbeitet, wenn die Zeitspanne, während der die Geschwindigkeit des Kraftfahrzeugs (15) größer gleich dem zweiten Schwellenwert ist, größer als ein vorgegebener Mindestwert ist.

4. Vorrichtung (10) nach einem der vorherigen Ansprüche, wobei
in dem zweiten Modus die Steuerungseinheit (12) die Bildwiederholfrequenz bei ansteigender Geschwindigkeit des Kraftfahrzeugs (15) reduziert; und
in dem zweiten Modus die Steuerungseinheit (12) die Bildwiederholfrequenz bei abfallender Geschwindigkeit des Kraftfahrzeugs (15) erhöht.

5. Vorrichtung (10) nach einem der Ansprüche 1 bis 3, wobei in dem zweiten Modus die Bildwiederholfrequenz 0 Hz beträgt.

6. Vorrichtung (10) nach einem der vorherigen Ansprüche, wobei
wenigstens ein Relativgeschwindigkeitssensor (17) an die Steuerungseinheit (12) anschließbar ist, der die Relativgeschwindigkeit des Kraftfahrzeugs zu einem vorausfahrenden Fahrzeug erfasst und an die Steuerungseinheit (12) sendet; und
die Steuerungseinheit (12) den ersten und/oder den zweiten Schwellenwert gemäß einer antitonen Funktion von der Relativgeschwindigkeit ändert.

7. Vorrichtung (10) nach einem der vorherigen Ansprüche, wobei in dem zweiten Modus die Bildauflösung und/oder die Farbtiefe und/oder die Helligkeit kleiner als in dem ersten Modus ist.

8. Kraftfahrzeug (15), umfassend wenigstens eine Vorrichtung (10) nach einem der vorherigen Ansprüche.

## Claims

1. Device (10) for displaying moving images in a motor vehicle (15), the device comprising:
at least one screen (11) for displaying the moving images, to which screen a moving image source (13) for the moving images can be connected; and
a control unit (12) for the screen (11), which control unit activates the screen (11) in at least one first mode, in which the moving images are displayed with normal reproduction parameters, and in a second mode, wherein
at least one speed sensor (14) detecting the speed of the motor vehicle (15) and transmitting it to the control unit (12) can be connected to the control unit (12);
the control unit (12) selects the first mode if the speed is less than a first threshold value;
the control unit (12) selects the second mode if the speed is more than or equal to a second threshold value which is higher than or equal to the first threshold value; and
the image refresh rate is lower in the second mode than in the first mode,
**characterised in that**
at least one distance sensor (16), which detects the distance of the motor vehicle (15) from an object in front of the motor vehicle (15) and/or from a vehicle travelling ahead and transmits it to the control unit (12), can be connected to the control unit (12); and
the control unit (12) changes the first and/or the second threshold value in accordance with an isotonic function of the distance.

2. Device (10) according to claim 1, wherein
the second threshold value is higher than the first threshold value;
the control unit (12) remains in the first mode if the first threshold value is reached or exceeded and changes from the first mode to the second mode if the second threshold value is reached or exceeded; and
the control unit (12) remains in the second mode if the second threshold value is undershot and changes from the second mode to the first mode if the first threshold value is undershot.

3. Device (10) according to any of the preceding claims, wherein the control unit (12) only operates in the second mode if the period of time in which the speed of the motor vehicle (15) is equal to or higher than the second threshold value is longer than a preset minimum value.

4. Device (10) according to any of the preceding claims, wherein
the control unit (12) reduces the image refresh rate in the second mode as the speed of the motor vehicle (15) increases; and
the control unit (12) increases the image refresh rate in the second mode as the speed of the motor vehicle (15) decreases.

5. Device (10) according to any of claims 1 to 3, wherein the image refresh rate is 0 Hz in the second mode.

6. Device (10) according to any of the preceding claims, wherein
at least one relative speed sensor (17), which detects the speed of the motor vehicle relative to a vehicle travelling ahead and transmits it to the control unit (12), can be connected to the control unit (12); and
the control unit (12) changes the first and/or the second threshold value in accordance with an antitone function of the relative speed.

7. Device (10) according to any of the preceding claims, wherein the image resolution and/or the colour depth and/or the brightness is/are less in the second mode than in the first mode.

8. Motor vehicle (15) comprising at least one device according to any of the preceding claims.

## Revendications

1. Dispositif (10) d'affichage d'images animées dans un véhicule automobile (15), comprenant :
au moins un écran (11) pour afficher les images animées, auquel peut être raccordé au moins une source d'images aminées (13) pour les images animées ; et
une unité de commande (12) pour l'écran (11) qui commande au moins un écran (11) dans au moins un premier mode, dans lequel les images animées sont affichées selon des paramètres de format normaux et dans un second mode,
au moins un capteur de vitesse (14) pouvant être raccordé à l'unité de commande (12) qui détecte la vitesse du véhicule automobile (15) et qui l'envoie à l'unité de commande (12) ;
l'unité de commande (12) sélectionnant le premier mode lorsque la vitesse est inférieure à une première valeur seuil ;
l'unité de commande (12) sélectionnant le second mode lorsque la vitesse est égale à une seconde valeur seuil qui est égale à la première valeur seuil ; et
dans le second mode la fréquence de rafraîchissement d'image étant inférieure à celle dans le premier mode,
**caractérisé**
**en ce qu'**au moins un capteur de distance (16) peut être raccordé à l'unité de commande (12), qui détecte la distance entre le véhicule automobile (15) et un objet se trouvant dans la direction de marche devant le véhicule automobile (15) et/ou un véhicule qui le précède et l'envoie à l'unité de commande (12) ; et
**en ce que** l'unité de commande (12) modifie la première et/ou la seconde valeur seuil selon une première fonction isotone de la distance.

2. Dispositif (10) selon la revendication 1,
la seconde valeur seuil étant supérieure à la première valeur seuil ;
l'unité de commande (12) demeurant dans le premier mode lorsque la première valeur seuil est atteinte ou devient inférieure et passe du premier mode au second mode lorsque la seconde valeur seuil est atteinte ou devient inférieure ; et
l'unité de commande (12) demeurant dans le seconde mode lorsque la seconde valeur seuil est devient inférieure, et passe du seconde mode au premier mode lorsque la première valeur seuil devient inférieure.

3. Dispositif (10) selon l'une quelconque des revendications précédentes, l'unité de commande (12) fonctionne uniquement dans le second mode lorsque l'intervalle temporel, pendant lequel la vitesse du véhicule automobile (15) est égale à la seconde valeur seuil, étant supérieur à une valeur minimum prédéfinie.

4. Dispositif (10) selon l'une quelconque des revendications précédentes,
dans le second mode l'unité de commande réduisant la fréquence de rafraîchissement d'image lorsque la vitesse du véhicule automobile (15) augmente ; et
dans le second mode l'unité de commande (12) augmentant la fréquence de rafraîchissement d'image lorsque la vitesse du véhicule automobile (15) décroît.

5. Dispositif selon l'une quelconque des revendications 1 à 3, dans le second mode la fréquence de rafraîchissement d'image s'élevant à 0 Hz.

6. Dispositif (10) selon l'une quelconque des revendications précédentes, au moins un capteur de vitesse relative (17) pouvant être raccordé à l'unité de commande (12) qui détecte la vitesse relative entre le véhicule automobile et un véhicule automobile le précédant et l'envoie à l'unité de commande (12) ; et
l'unité de commande (12) modifiant la première et/ou la seconde valeur seuil selon une fonction antitone par rapport à la vitesse relative.

7. Dispositif (10) selon l'une quelconque des revendications précédentes, dans le second mode la résolution d'image et/ou l'intensité de la couleur et/ou la luminosité étant inférieure(s) à celle(s) dans le premier mode.

8. Véhicule automobile (15) comprenant au moins un dispositif (10) selon l'une des revendications précédentes.
